# EUROPEAN PATENT APPLICATION

(11) **EP 2 367 319 A1**
(43) Date of publication of application: **21.09.2011**
(21) Application number: 10305263.5
(22) Date of filing: 17.03.2010
(51) Int. Cl.: H04L 12/14

(54) **Improved method and devices for charging**

(71) Applicant: Alcatel Lucent, 75008 Paris (FR)
(72) Inventor: T'Syen, Luc, 2230 Herselt (BE); Verbandt, Hugo, 2170 Merksem (BE)
(74) Representative: D'Halleweyn, Nele Veerle Trees Gertrudis

(57) **Abstract**

A server is disclosed adapted for sending, receiving and interpreting signaling messages used for the setup and control of a communication session between a first and a second end point, comprising a charging information retrieval means for retrieving charging information related to the communication session and a charging information forwarding means for forwarding the charging information to a charging management unit, wherein the server comprises a means for incorporating the charging information into the signaling messages; and an associated method.

## Description

### Technical field of the invention

The present invention relates to the field of telecommunication systems, wherein IP and multimedia charging is to be performed.

### Background of the invention

The IP Multimedia Core Network (CN) subsystem as defined by 3GPP comprises all CN elements for provisioning of multimedia services. This includes signaling and bearer related network elements as defined in technical specification TS 23.002 by 3GPP.

In order to achieve access independence and to maintain a smooth interoperation with wireline terminals across the Internet, the IP multimedia subsystem (IMS) attempts to be conformant to IETF "Internet standards" for the cases where an IETF protocol has been selected, e.g. SIP (RFC 3261). The IP multimedia core network (IM CN) subsystem enables Public Land Mobile Network (PLMN) operators to offer their subscribers multimedia services based on and built upon Internet applications, services and protocols.

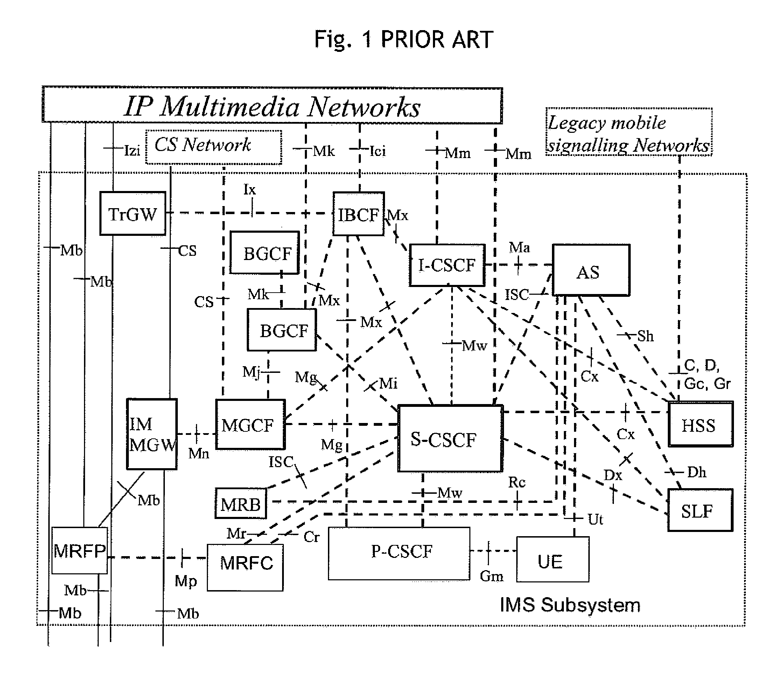

The complete solution for the support of IP multimedia applications consists of terminals, IP-Connectivity Access Networks (IP-CAN), and specific functional elements of the IM CN subsystem described in technical specification TS23.228. Figure 1 below represents the IMS reference architecture including interfaces towards legacy networks and other IP based multimedia systems, as described in 3GPP specification TS23.228(v9.2.0).

During a session setup a SIP signaling path is established through multiple functions in the IMS network (e.g. P-CSCF, S-CSCF, BGCF, IBCF, AS...). For charging purposes every function comprises a CTF (Charging Trigger Function) which sends charging data packed as ACRs (Accounting Request) over the "Rf" interface (DIAMETER protocol) to the CDF (Charging Data Function). At the CDF the ACR messages must be collected and correlated using the ICID (Charging correlation Identifier).

In practice, the IMS functions are not very much grouped into hardware components resulting in the use of a large number of different hardware components. They generate a huge number of charging messages which need to be collected, correlated and processed. This results in a very high data volume, complexity for aggregation and correlation of that data by the receiver.

There exists a need for improved methods for charging in IP Multimedia System architectures and associated devices.

### Summary of the invention

Several roles of Session Initiation Protocol (SIP) servers or proxies, collectively called Call Session Control Function (CSCF), are used to process SIP signaling packets in the IMS:
- A Proxy-CSCF (P-CSCF) is a SIP proxy that is the first point of contact for the IMS terminal. It can be located either in the visited network or in the home network. Some networks may use a Session Border Controller (SBC) for this function. The terminal discovers its P-CSCF with either DHCP, or it is assigned in the PDP Context (in General Packet Radio Service (GPRS)). It is assigned to an IMS terminal during registration, and does not change for the duration of the registration. It sits on the path of all signaling messages, and can inspect every message. It authenticates the user and establishes an IPsec security association with the IMS terminal. Other nodes trust the P-CSCF, and do not have to authenticate the user again. It can also compress and decompress SIP messages, which reduces the round-trip over slow radio links. It may include a Policy Decision Function (PDF), which authorizes media plane resources e.g. quality of service (QoS) over the media plane. It's used for policy control, bandwidth management, etc. The PDF can also be a separate function. It also generates charging records.
- A Serving-CSCF (S-CSCF) is the central node of the signaling plane. It is a SIP server, and performs session control. It is always located in the home network. It uses Diameter Cx and Dx interfaces to the Home Subscriber Server (HSS) to download and upload user profiles. It has no local storage of the user. All necessary information is loaded from the HSS. It handles SIP registrations, which allows it to bind the user location (e.g. the IP address of the terminal) and the SIP address. It sits on the path of all signaling messages, and can inspect every message. It decides to which application server(s) the SIP message will be forwarded, in order to provide their services. It provides routing services, typically using Electronic Numbering (ENUM) lookups. It enforces the policy of the network operator. There can be multiple S-CSCFs in the network for load distribution and high availability reasons. It's the HSS that assigns the S-CSCF to a user, when it's queried by the I-CSCF.
- An Interrogating-CSCF (I-CSCF) is another SIP function located at the edge of an administrative domain. Its IP address is published in the Domain Name System (DNS) of the domain (using NAPTR and SRV type of DNS records), so that remote servers can find it, and use it as a forwarding point (e.g. registering) for SIP packets to this domain. The I-CSCF queries the HSS to retrieve the user location, and then routes the SIP request to its assigned S-CSCF.
- SIP Application servers
   Application servers (AS) host and execute services, and interface with the S-CSCF using Session Initiation Protocol (SIP) .
- Media Resource Function(MRF)and MRF Controller(MRFC)
   The Media Resource Function (MRF) provides media related functions such as media manipulation (e.g. voice stream mixing) and playing of tones and announcements.
   Each MRF is further divided into a Media Resource Function Controller (MRFC) and a Media Resource Function Processor (MRFP).
   The MRFC is a signaling plane node that acts as a SIP User Agent to the S-CSCF, and which controls the MRFP across an H.248 interface. The MRFP is a media plane node that implements all media-related functions.
- Breakout Gateway Control Function (BGCF): is a SIP server that includes routing functionality based on telephone numbers. It is only used when calling from the IMS to a phone in a circuit switched network, such as the Public Switched Telephone Network (PSTN) or the Public land mobile network (PLMN).
- A Media Gateway Controller Function (MGCF) does call control protocol conversion between SIP and ISUP and interfaces with the SGW over SCTP. It also controls the resources in a Media Gateway (MGW) across an H.248 interface. A Signaling Gateway (SGW) interfaces with the signaling plane of the PSTN circuit switched (CS) networks. It transforms lower layer protocols as Stream Control Transmission Protocol (SCTP, an Internet Protocol (IP) protocol) into Message Transfer Part (MTP, an Signaling System 7 (SS7) protocol), to pass ISDN User Part (ISUP) from the MGCF to the CS network. A Media Gateway (MGW) interfaces with the media plane of the CS network, by converting between RTP and PCM. It can also transcode when the codecs don't match (e.g. IMS might use AMR, PSTN might use G.711).
- An Interconnect Border Control Function (IBCF) provides overall control of the boundary between different service provider networks. It provides security for the IMS core in terms of signaling information by implementing a Topology-Hiding Inter-network Gateway (THIG) sub-function. This sub-function performs signaling-based topology hiding, IPv4-IPv6 inter-working and session screening based upon source and destination signaling addresses. The IBCF also invokes the Inter-Working Function (IWF) when connecting non-SIP or non-IPv6 networks, and performs admission control and bandwidth allocation using local policies or via interface to ETSI TISPAN Resource and Admission Control Subsystem (RACS). The IBCF interacts with a Interconnect Border Gateway Function (I-BGF) for control of the boundary at the transport layers including pinhole firewall, NAPT and numerous other features. The I-BGF controls the transport boundary at layers 3 and 4 between service provider networks. This function acts as a pinhole firewall and NAT device protecting the service provider's IMS core. It controls access by packet filtering on IP address/port and opening/closing gates (pinholes) into the network. It uses Network Address and Port Translations (NAPT) to hide the IP addresses/ports of the service elements in the IMS core. QoS packet marking, bandwidth & signaling rate policing, usage metering and QoS measurements for the media flows are additional features supported by the I-BGF.
- AGCF is a border function comprising similar functionalities as a P-CSCF, but it is adapted for connecting the IMS with POTS lines (Plain Old Telephone Set). AGCF comprises in addition a signalling conversion from SIP to H.248. The AGCF has been specified by ETSI-TISPAN in ETSI ES 282.002 PSTN/ISDM Emulation Subsystem (PES) - Functional Architecture (see http://tech-invite.com/Ti-etsi-standards-TISPAN02.html#es-282-002).

According to the current standard, all the SIP network entities (P-CSCF, I-CSCF, S-CSCF, BGCF, MRFC, MGCF, AS, IBCF, AGCF) involved in the session use the Diameter Rf interface to send accounting information to a Charging Collector Function (CCF) located in the same domain. The CCF will collect all this information, and build a Call Detail Record (CDR), which is sent to the billing system (BS) of the domain. Note that the CCF is used until 3GPP Release 5. From Release 6 onwards, the CCF was split into a CDF (Charging Data Function) and a CGF (Charging Gateway Function). The philosophy behind is that CDF adapts towards the Rf interface (network side), the CGF adapts towards the northbound Billing Domain side. Any combination location of CDF & CGF is allowed (see TS 32.260-900,Chapter 4.5, http://www.3gpp.org/ftp/Specs/archive/32_{_}series/32.240/32240 -900.zip). In most cases CDF and CGF are combined in a single product, i.e. the Ga interface between CDF and CGF remains internal. The former CCF is therefore mostly addressed as "CDF/CGF".

On the 3GPP "Rf" reference interface, the data volume on the interface and the processing intelligence and capacity required by the CDF are very high.

As an illustration; the charging data packet volume for an IMS network of 2 million users generating about 1000 calls per second, can be estimated roughly as 10.000 offline charging messages per second and a volume of 10M bytes per second, assuming an average event size of 1kbyte.

It is an object of the present invention to provide servers and methods for using the servers which solve at least one of the above problems.

In a first aspect of the present invention a server is disclosed adapted for sending, receiving and interpreting signaling messages used for the setup and control of a communication session between a first and a second end point, comprising a charging information retrieval means for retrieving charging information related to the communication session, wherein the server comprises a means for incorporating the charging information into the signaling messages.

According to embodiments of the present invention, the server further comprises a charging information forwarding means for forwarding the charging information to a charging management unit.

The first and second end points can for instance be a user device, an application, a service, an MRFC etc. (e.g. a helpdesk).

The signaling messages may for instance be call setup messages, call modification or call tear-down messages.

In further embodiments of the present invention a server is disclosed, wherein the charging information retrieval means comprises an old charging information extracting means for extracting old charging information incorporated in incoming signaling messages; a local charging information retrieval means for retrieving local charging information; a charging information bundling means for bundling local charging information with the old charging information into bundled charging information.

In further embodiments of the present invention a server is disclosed, wherein the server is a Session-Initiation Protocol server (SIP server), adapted for participating in the setup of SIP sessions, as defined in RFC3261 by the Internet Engineering Task Force(IETF), and wherein the signaling messages comprise SIP messages.

In further embodiments of the present invention a server is disclosed, further comprising a means for exchanging the bundled charging information over a DIAMETER (as defined in RFC3588 by the IETF) interface with the charging management unit.

In further embodiments of the present invention a server is disclosed comprising means for performing session control. The server may be adapted to provide any combination of functionalities associated to a S-CSCF in the prior art.

In further embodiments of the present invention a server is disclosed comprising means for querying a home subscriber server to retrieve user location.
The server may be adapted to provide any combination of functionalities associated to a I-CSCF in the prior art.

In further embodiments of the present invention a server is disclosed, comprising means for authenticating the user and establishing an IPSec security association with the IMS terminal. The server may be adapted to provide any combination of functionalities associated to a P-CSCF in the prior art.

In further embodiments of the present invention a server is disclosed, comprising means for hosting and executing services. The server may be adapted to provide any combination of functionalities associated to an Application server in the prior art.

In further embodiments of the present invention a server is disclosed, comprising means for routing cells based on telephone numbers. The server may be adapted to provide any combination of functionalities associated to a BGCF in the prior art.

In further embodiments of the present invention a server is disclosed, comprising means for performing protocol conversion between SIP and ISUP. The server may be adapted to provide any combination of functionalities associated to a MGCF in the prior art.

In further embodiments of the present invention a server is disclosed, comprising means for controlling a media resource function processor across an H.248 interface. The server may be adapted to provide any combination of functionalities associated to a MRFC in the prior art.

In further embodiments of the present invention a server is disclosed, comprising a means for providing overall control between different service provider networks. The server may be adapted to provide any combination of functionalities associated to a IBCF in the prior art.

In further embodiments of the present invention a server is disclosed, comprising a means for performing signaling conversion from SIP to H.248. The server may be adapted to provide any combination of functionalities associated to an AGCF in the prior art.

In a second aspect of the present invention a method is disclosed for processing charging information relating to a communication session between a first and a second end point, the communication session being handled by at least two intermediate servers, comprising at at least one intermediate server:
- retrieving local charging information associated to the communication session;
- receiving signaling messages used for the setup and control of the communication session;
- extracting old charging information from the signaling messages; and
- bundling the old charging information with the local charging information into bundled charging information for the session.

Preferable the method relates to an offline charging mechanism.

In further embodiments of the present invention a method is disclosed comprising forwarding the bundled charging information to the next server involved in the communication session.

In further embodiments of the present invention a method is disclosed, wherein the forwarding comprises incorporating the bundled charging information into signaling messages of the communication session.

In further embodiments of the present invention a method is disclosed, further comprising at the last intermediate server in the communication session; forwarding the bundled charging information to a charging management unit.

In further embodiments of the present invention a method is disclosed, wherein the communication session is a SIP session as defined in RFC3261 by the Internet Engineering Task Force (IETF).

In a third aspect of the present invention a method is disclosed for processing charging information relating to a communication session between a first and a second end point, the communication session being handled by at least two intermediate servers, comprising at at least one intermediate server:
- retrieving charging information associated to the communication session; and
- incorporating the charging information into signaling messages used for the setup and control of the communication session.

In further embodiments of the present invention, a method is disclosed, further comprising at at least the one intermediate server:
- receiving signaling messages used for the setup and control of the communication session;
- extracting old charging information from the signaling messages;
- retrieving local charging information associated to the communication session;
- bundling the old charging information with local charging information into bundled charging information for the session;
- forwarding the bundled charging information to the next server involved in the communication session.

In further embodiments of the present invention, the forwarding comprises incorporating the bundled charging information into signaling messages of the communication session.

In further embodiments of the present invention, the method further comprises at the last intermediate server in the communication session; forwarding the bundled charging information to a charging management unit.

In further embodiments of the present invention a method is disclosed, wherein the communication session is a SIP session as defined in RFC3261 by the Internet Engineering Task Force (IETF).

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

### Brief description of the drawings

The accompanying drawings are used to illustrate embodiments of the present invention.
Fig. 1 illustrates the state of the art IMS reference architecture as defined in TS 23.228 (V 9.2.0).
Fig. 2 illustrates typical network functionalities which do generate or retrieve offline charging information and which, according to the stat of the art, forward charging information over the Rf reference interface by means of DIAMETER.
Figs. 3 and 4 illustrate embodiments of the present invention. Fig. 3 illustrates a call flow where all involved servers operate within the same trust domain.
Fig. 4 illustrates a call flow where, next to trusted servers, also non-trusted servers are involved.
Fig. 5 illustrates an embodiment according to the present invention, wherein an AGCF is involved on the originator side. The AGFC function is a function which is defined in the standardization body ETSI-TISPAN, where the interaction of "fixed" subscribers (i.e. vs. mobile) with an IMS system as defined in 3GPP, is defined.
Fig. 6 and 7 illustrate a general aspect of embodiments of the present invention.

Reference signs are chosen such that they are the same for similar or equal elements or features in different figures or drawings.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

According to embodiments of the present invention a method is provided which allows efficient charging in the 3GPP IMS architecture and which provides a reduced load for the Rf reference interface according to such architecture. In stead of sending multiple charging events on multiple interfaces ("Rf interfaces") to a collector, which needs to correlate/combine the charging information, embodiments according to the present invention are more efficient and keep the charging information combined at the source and send it "bundled" to the collector. As explained before, the SIP signaling path is established at session setup. Hereby, all network functions involved in the same session are linked through SIP signaling. When a charging trigger function (CTF) on a certain function or server is triggered to send an accounting request (ACR) message, it shall not send the ACR by means of DIAMETER over the Rf reference interface, but will add the information in the signaling path (at least in as far as the function or server is in a trust domain.

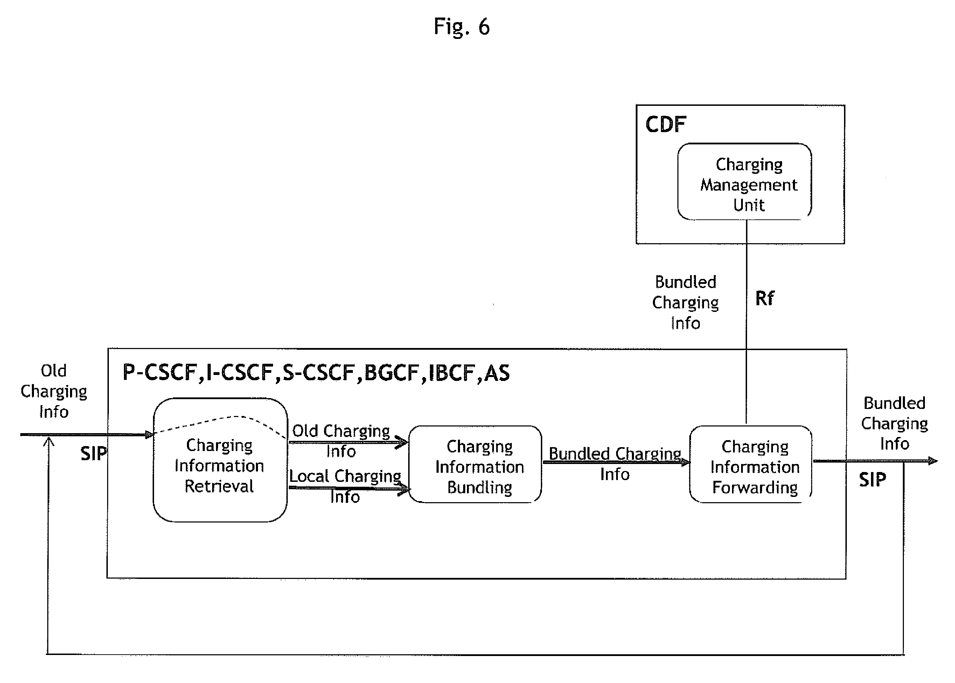

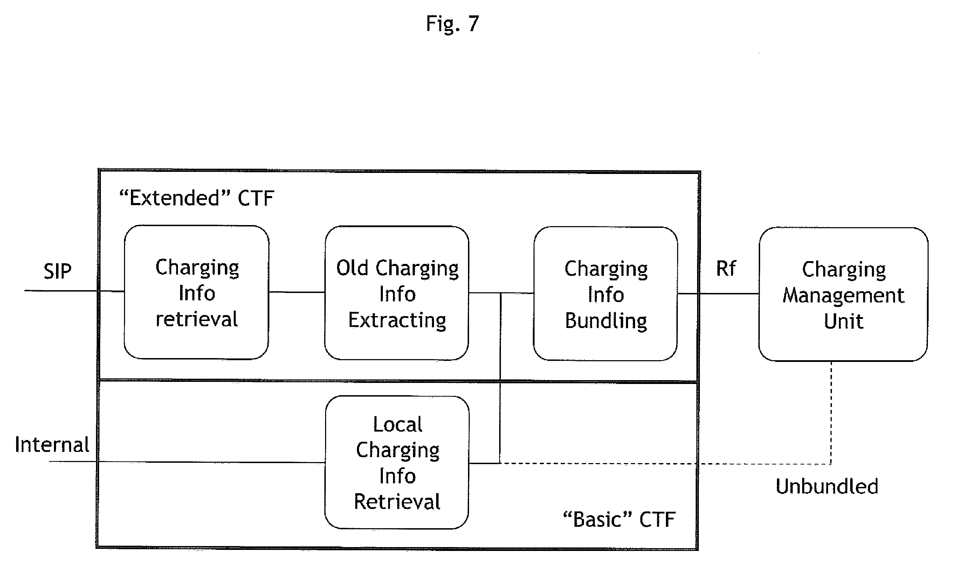

The charging information may be added to the SIP messages used for setting up and managing the SIP session. This charging information may for instance be included in the message body of the SIP messages. According to preferred embodiments every charging trigger function (CTF) or server appends its own data into the SIP messages, whereby a bundle of individual parts of charging information is, for instance sequentially, added into the body of SIP messages. The different portions of charging information can also be combined within a certain server or function into a more compact format of charging information in which predetermined types of charging information may be combined. This is for instance illustrated in Figs. 6 and 7.

In Fig. 6, the process executed at the different servers or functions as for instance at the P-CSCF, I-CSCF, S-CSCF, BGCF, IBCF, AS, is illustrated. Old charging information present in incoming SIP messages is retrieved by the respective servers or functions, as well as local charging information. The old charging information and local charging information are then bundled during a process of charging information bundling whereby bundled charging information is produced. The bundled charging information is then forwarded to the next server/function in the SIP path, where it will be treated again as old charging information by that server/function. Alternatively, for instance at the end of the SIP signalling path, the bundled charging information may be exchanged over an Rf reference interface, by means of for instance a DIAMETER protocol, with a charging management unit. This charging management unit may for instance be comprised in a charging data function (CDF).

In Fig. 7 the notion of the "extended" CTF, according to embodiments of the present invention, for instance for the P-CSCF, S-CSCF, I-CSCF, BGCF, IBCF, MGCF and MRFC is illustrated. Where the "basic" (state of the art) CTF retrieves internal or local charging information, and forwards it towards the charging management unit over an Rf interface in an unbundled format, the "extended" CTF comprises the advantageous functionalities of charging information retrieval, extraction of old charging information of SIP messages, bundling of old charging information and local charging information and forwarding the bundled charging information by means of SIP messages along the SIP path. Alternatively, the bundled charging information can be forwarded to a charging management unit over the Rf reference interface.

3GPP specification 32260, v8.9.0, p94, Table 6.3.2.1. illustrates the basic structure of the supported fields in the Charging Data Request message for IMS offline charging. It comprises the list of information elements (Diameter AVPs) provided by each of the IMS functions.

Several options are possible, some of which are:
(1) The first option is to use this table as a template. Every function on the signaling path inserts its own unique information, i.e. when a certain information element or value is not present yet in the received table, it is inserted. An AVP value is not duplicated.
   For instance; Called-Party-Address AVP is inserted by P-CSCF. As this AVP is not change in the call setup, the other functions will not insert a value (but sort of "confirm" the P-CSCF value).
   Timestamps AVP may or may not be inserted by each node (potential a configurable option, as multiple timestamps with differences of milliseconds (ms) add no real value to the bundled data).
   Further optimization can be achieved by a configurable AVP list at node level.
(2) A second possibility is to make every function (on which offline charging is activated) append its own specific/unique data. The bundled data is then a list that needs to be unpacked accordingly by the CDF.

The data volume reduction can be realized by for instance not duplicating the following information:
- All AVPs of the "Supported Operation Types" are specific to the Diameter connection itself. They may potentially be skipped for all nodes that pass charging data in a bundled way through SIP.
- Service Information AVPs, identical on all functions
   o Calling Party Address AVP
   o Number Portability Routing information AVP
   o Carrier Select routing information AVP
   o Called Asserted Identity AVP
   o Inter operator identifiers AVP
   o IMS Charging identifier AVP
   o Early Media Description AVP
   o SDP Session Description AVP
   o SDP Media Component AVP
   o GGSN Address AVP
   o Messages Bodies AVP
   o Cause Code AVP
   o Access Network Information AVP
- Some Service Information AVPs are different per node, but have less or no added value for charging, for instance
   o User Session Id AVP
   o Event Type AVP
   o Timestamps AVP

These are examples which illustrate the feasibility and relevance of embodiments according to the present invention. It will be recognized by the skilled person that alternative, though similar schemes can be thought of.
It should further be noted that SIP provides the option to defining specific message bodies. (as for instance in http://tools.ietf.org/html/draft-ietf-sip-body-handling-05). The bundled charging information can be a type of message body according to preferred embodiments of the present invention.

According to further embodiments of the present invention, the volume of charging information data can be further reduced by a filter on the message content. A CTF function or server could for instance only append charging information that is not yet present in the received bundled charging information.

According to preferred embodiments of the present invention, the bundled charging information is eventually passed to the charging management unit (e.g. CDF (charging data function)) as s single diameter message over the Rf reference interface. This can preferably be performed by the last trusted server/function in the SIP session path.

It will be appreciated by the skilled person that all charging information relating to a predetermined SIP session stays together. The charging management unit (for instance the CDF) then does not need to perform sequencing (sorting) or ID correlation, such that required processing capacity can be reduced.

It will be recognized by the skilled person that the method and device according to methods of the present invention can provide a simplification of the overall charging mechanism within an IP multimedia subsystem, that the capacity requirements of the charging management unit can be strongly reduced and that at the same time the reliability of the charging mechanism is increased. It is expected that the use of the method and devices according to embodiments of the present invention in an IP multimedia subsystem as defined by 3GPP can reduce the cost relating to charging activities with 50%.

In Fig. 1, the IMS reference architecture (as defined in TS 23.228 V 9.2.0) is illustrated.

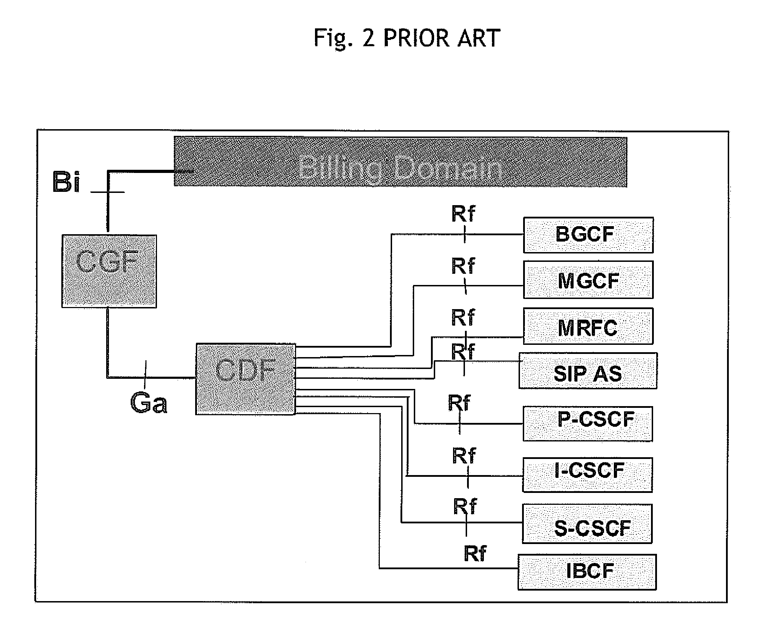

In Fig. 2 the different IMS functions that generate or retrieve charging information (called ACR's on the 3GPP Rf reference point, and charging data records (CDR) from CDF to CGF and from CGF to Billing domain) are illustrated.
They may comprise SIP application servers (SIP AS), proxy-call session control functions (P-CSCF), interrogating-call (I-CSCF) session control functions, serving-call session control functions (S-CSCF), break-out gateway control functions (BGCF), media-gateway control functions (MGCF) or media resource function controllers (MRFC). All of these functions are, in the state of the art, sending charging information over the Rf reference interface to the charging data function (CDF), which is further connected by means of a charging gateway function (CGF) to the billing application.

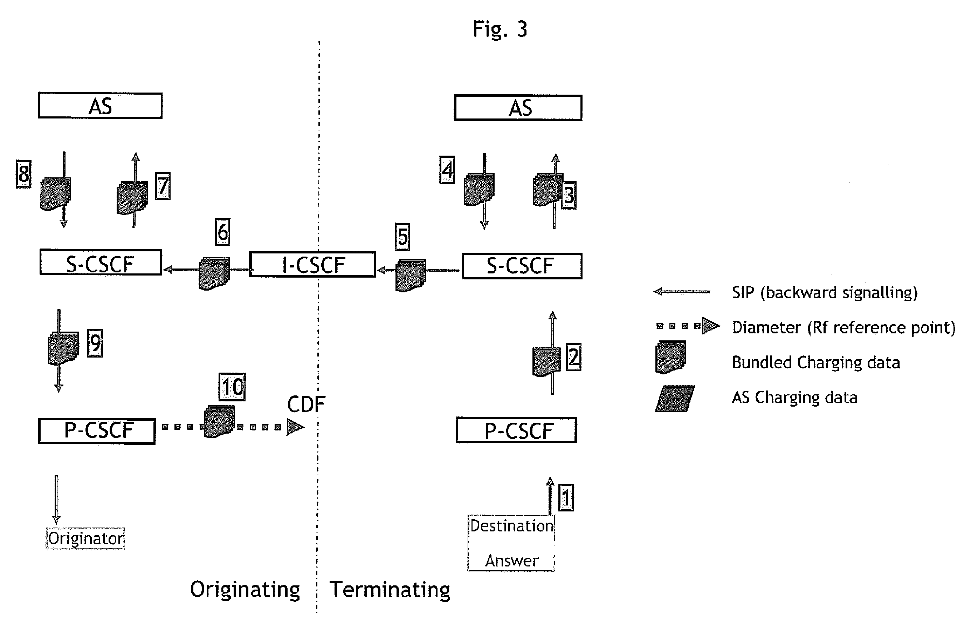

In Fig. 3 an overview is given of network functions which are typically involved in an IP multimedia session which is set up by means of the SIP protocol. A call flow where all involved servers operate within the same (or a single) trust domain is illustrated. Alternative call flows are known to the skilled person, for instance from 3GPP TS 32.260, in which many typical SIP/Diameter call flows are illustrated.

A "trust domain" is the collection of servers (any function) that are owned/operated by the same operator or deployment. When for instance the originating subscriber is registered in domain x (e.g. operator A) and the terminating user in domain y (e.g. operator B), then a border node such as IBCF or MGCF should be been inserted between both (trust) domains to monitor Service Level Agreements (to control what comes in the own domain, to secure against misuse etc.).
A similar relationship exists also at service level. A certain user domain (e.g. domain A) may allow its users to access an external service provider (e.g. service provider B). The external service provider is seen by the home domain as a (3^{rd} party) AS. In such configurations the AS needs a "trust" relationship with the S-CSCF of the home domain. If no trust relationship exists, then a border node must be inserted in between the S-CSCF and the AS.

The SIP backward signaling indicated by the black arrows in Fig. 3, passes from the destination through the P-CSCF, then the S-CSCF, application server (AS), back to the S-CSCF, to the I-CSCF, a further S-CSCF, a further application server (AS), back to the serving-CSCF and further to the P-CSCF and to the originator of the IP multimedia session.

A SIP session is established by a SIP INVITE message from an originating terminal to the originating P-CSCF, the orig. S-CSCF, the originating AS (invoke originating services), the I-CSCF (find terminating user), the terminating S-CSCF, the terminating AS (invocation of services for the destination user) to the P-CSCF where the terminating user is registered. When the terminating user answers, a 200 OK message travels the same signaling path in backward direction, [1] through [9]. Each function adds its own (unique) charging data until the border of the own domain, i.e. the originating P-CSCF. That P-CSCF will remove the bundled charging data from SIP, add its own data, and sends the data over Diameter to the CDF [10].

Note that SIP requests (e.g. INVITE, REGISTER, SUBSCRIBE, REFER..) are acknowledged by backward responses such as 200 OK, 3xx, 4xx, 5xx or 6xx. According to preferred embodiments of the present invention, bundled charging information typically travels embedded on those backward signaling messages.

Each of the functions generates charging information (e.g. in the form of charging data),
which are added into the SIP messages, for instance into the SIP backward signaling messages. By bundling the different charging data into the SIP messages used for setting up and managing the communication session, the bundle of charging data is kept together and eventually forwarded to a predetermined function or server, which is configured for exchanging the bundled charging data of the session to the charging data function (charging management unit) in a single information exchange between that function or server and the charging management unit. This single information exchange may comprise e.g. an exchange over an Rf reference interface by means of DIAMETER.

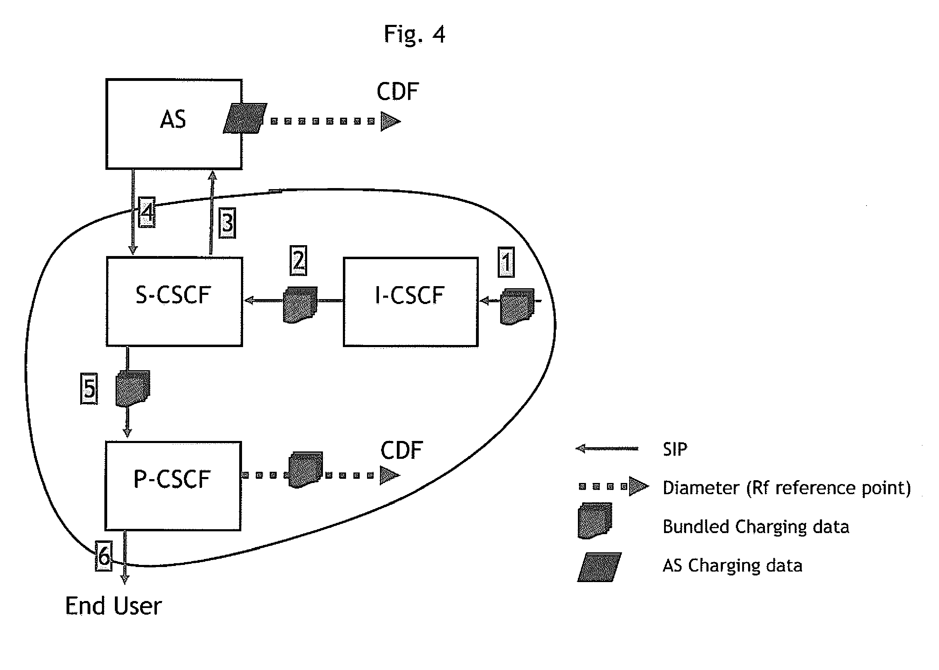

In Fig. 4 a similar embodiment according to the present invention has been illustrated, wherein not all servers or functions which are part of the SIP session are trusted parties. For instance the application server may be in the path of the SIP call, but may not be in a trusted relationship with the serving-CSCF. In these embodiments the mechanism and devices as described before can still be used. The bundle charging data which will be eventually forwarded by the P-CSCF towards the charging management unit (for instance CDF) will then have to be completed by providing further charging information from the non-trusted function or server to the charging management unit (charging data CDF), for instance by means of one or more additional exchanges of charging information over the Rf reference interface by means of DIAMETER.

In case the AS is not part of the trust domain, S-CSCF will not pass the charging information but strips the information from the SIP message and stores it. The stored information will be inserted in the signaling again when it returns from the AS. The criteria for S-CSCF to strip and store the bundled charging information from the backward SIP signaling can be the same as the standardized criteria to remove P-Charging-Function-Addresses or other private headers from the SIP messages when the borders of the trust domain are crossed. Note that in this case the charging streams generated by the foreign AS and the home CN will most likely not be merged. Each domain will route the own charging data to its own CDF.

It should be noted that, as has been described above, the AS may belong to an external domain. A similar scenario can be applied when the AS would not have the necessary capabilities in order to be part of the SIP-call flow. In both scenarios the relationship between S-CSCF and the AS in is similar; the AS is not in the "path" for the bundling of charging data.

Another case is where a specific node of the own domain (example AS in this case) does not have the capabilities to bundle charging information. In such case the AS will send its own data (through Rf or otherwise) to a CDF. The bundled data will be passed by the P-CSCF's charging information forwarding to the CDF. In this case the CDF/CGF may correlate both charging data and generate a single CDR. Even though still correlation is needed at CDF/CGF, the capacity requirement to execute correlation task is substantially reduced.

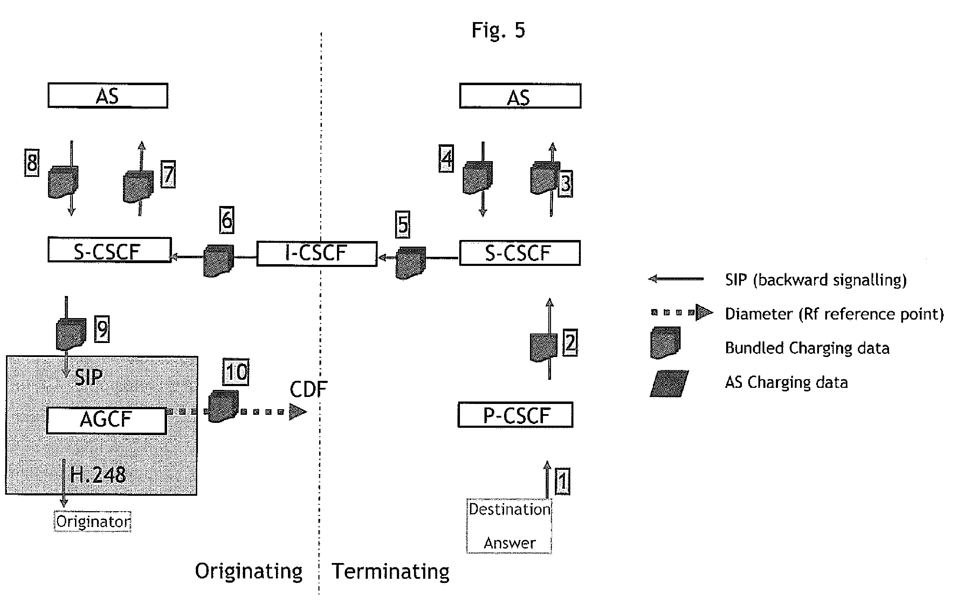

In Fig. 5 similar embodiments are illustrated as in Fig. 3, but wherein the P-CSCF at the originator side is replaced by an AGCF functionality, which interfaces with POTS (Plain Old Telephone Set) lines. The AGCF performs signalling conversion from SIP to H.248.

While the principles of the invention have been set out above in connection with specific embodiments, it is to be clearly understood that this description is merely made by way of example and not as a limitation of the scope of protection which is determined by the appended claims.

## Claims

1. A server adapted for sending, receiving and interpreting signaling messages used for the setup and control of a communication session between a first and a second end point, comprising
a charging information retrieval means for retrieving charging information related to said communication session, **characterised in that** said server comprises a means for incorporating said charging information into said signaling messages.

2. A server according to claim 1, wherein said charging information retrieval means comprises
a. an old charging information extracting means for extracting old charging information incorporated in incoming signaling messages;
b. a local charging information retrieval means for retrieving local charging information;
c. a charging information bundling means for bundling local charging information with said old charging information into bundled charging information.

3. A server according to claim 1 or 2, wherein said server is a Session-Initiation Protocol server (SIP server), adapted for participating in the setup of SIP sessions, as defined in RFC3261 by the Internet Engineering Task Force(IETF), and wherein said signaling messages comprise SIP messages.

4. A server according to any of the previous claims, further comprising a means for exchanging said bundled charging information over a DIAMETER (as defined in RFC3588 by the IETF) interface with said charging management unit.

5. A server according to any of the claims 1 to 4, comprising means for performing session control.

6. A server according to any of the claims 1 to 4, comprising means for querying a home subscriber server to retrieve user location.

7. A server according to any of the claims 1 to 4, comprising means for authenticating the user and establishing an IPSec security association with the IMS terminal.

8. A server according to any of the claims 1 to 4, comprising means for hosting and executing services.

9. A server according to any of the claims 1 to 4, comprising means for routing cells based on telephone numbers.

10. A server according to any of the claims 1 to 4, comprising means for performing protocol conversion between SIP and ISUP.

11. A server according to any of the claims 1 to 4, comprising means for controlling a media resource function processor across an H.248 interface.

12. A method for processing charging information relating to a communication session between a first and a second end point, said communication session being handled by at least two intermediate servers, comprising at at least one intermediate server:
- retrieving charging information associated to said communication session; and
- incorporating said charging information into signaling messages used for the setup and control of said communication session.

13. The method according to claim 12, further comprising at at least said one intermediate server:
- receiving signaling messages used for the setup and control of said communication session;
- extracting old charging information from said signaling messages;
- retrieving local charging information associated to said communication session;
- bundling said old charging information with local charging information into bundled charging information for said session;
- forwarding said bundled charging information to the next server involved in said communication session.

14. A method according to claim 13, wherein said forwarding comprises incorporating said bundled charging information into signaling messages of said communication session.

15. A method according to any of claims 13 to 14, further comprising at the last intermediate server in said communication session; forwarding said bundled charging information to a charging management unit.
